# EUROPEAN PATENT APPLICATION

(11) **EP 3 654 197 A1**
(43) Date of publication of application: **20.05.2020**
(21) Application number: 19812893.6
(22) Date of filing: 09.09.2019
(51) Int. Cl.: G06F 16/24

(54) **SMART CONTRACT MANAGEMENT METHOD, SYSTEM, APPARATUS, AND COMPUTER STORAGE MEDIUM**

(30) Priority: 17.09.2018 CN 201811082879
(71) Applicant: Launch Tech Co., Ltd, Longgang District Shenzhen Guangdong 518000 (CN)
(72) Inventor: LIU,Jun, Shenzhen Guangdong 518000 (CN); LIU, Xin, Shenzhen Guangdong 518000 (CN); HUANG, Qingcai, Shenzhen Guangdong 518000 PEOPLE'S REPUBLIC OF CHINA (CN)
(74) Representative: Viering, Jentschura & Partner mbB Patent- und Rechtsanwälte
(86) International application number: PCT/CN2019/104938
(87) International publication number: WO 2020/057388

(57) **Abstract**

A method, a system, and an apparatus for managing smart contracts, and a computer storage medium are provided according to the present disclosure and are applicable to a blockchain node device. The method includes the following operations. Target smart contracts are obtained. Function description information of the target smart contracts is obtained. The target smart contracts and the function description information are stored into a preset smart contract, and the preset smart contract is added to a blockchain. A query request sent by a user client is received. A target smart contract corresponding to the query request is searched for in the preset smart contract, and the target smart contract corresponding to the query request is determined as a resulting smart contract. The resulting smart contract is sent to the user client. The method for managing smart contracts provided by the present disclosure enables a user can determine functions of the target smart contracts according to the function description information. Compared with the related art, the efficiency that the user uses the smart contracts is enhanced. The system and the apparatus for managing smart contract management, and the computer readable storage medium provided according to the present disclosure also solve corresponding technical problems.

## Description

### CROSS-REFERENCE TO RELATED APPLICATION(S)

This application claims priority to Chinese Patent Application No. 201811082879.3, filed on September 17, 2018 to China National Intellectual Property Administration, and entitled "METHOD, SYSTEM, AND APPARATUS FOR MANAGING SMART CONTRACTS AND COMPUTER STORAGE MEDIUM", the disclosure of which is hereby incorporated by reference in its entirety.

### TECHNICAL FIELD

The present disclosure relates to the field of blockchain technology, and more particularly to a method, a system, and an apparatus for managing smart contracts, and a computer storage medium.

### BACKGROUND

Due to the transparency, inflexibility and immutability of smart contracts, and their inherently functional stability and neutrality, the smart contracts have more and more practice in authentication business scenarios. For example, the Canadian and Dutch governments have collaborated to use the blockchain technology to verify identities of flight passengers, and the University College London has announced that they will adopt Bitcoin verification technology to verify graduate qualifications, etc.

However, although the smart contracts are being used more and more widely, there are still phenomena that users fail to choose smart contracts they need when they don't know the functions of the smart contracts due to a large number of smart contracts, that is, it is inefficient for the users to use the smart contracts.

Therefore, how to improve the efficiency that the users uses the smart contracts is an urgent problem to be solved by those skilled in the art.

### SUMMARY

A purpose of the present disclosure is to provide a method for managing smart contracts capable of solving a technical problem that how to improve the efficiency for users to use the smart contracts to a certain extent. A system and an apparatus for managing smart contracts, and a computer storage medium are further provided according to the present disclosure.

In order to achieve the above objects, the following technical solutions are provided according to the present disclosure.

A method for managing smart contracts is provided. The method is applicable to a blockchain node device and includes the following operations.

Target smart contracts are obtained. Function description information of the target smart contracts is obtained. The target smart contracts and the function description information are stored into a preset smart contract, and the preset smart contract is added to a blockchain. A query request sent by a user client is received. A target smart contract corresponding to the query request is searched for in the preset smart contract, and the target smart contract corresponding to the query request is determined as a resulting smart contract. The resulting smart contract is sent to the user client.

In some implementations, the target smart contract corresponding to the query request is searched for in the preset smart contract and the target smart contract corresponding to the query request is determined as the resulting smart contract as follows. A target account identification in the query request is parsed. A target smart contract corresponding to the target account identification is searched for in the preset smart contract, and the target smart contract corresponding to the target account identification is determined as the resulting smart contract.

In some implementations, the target smart contract corresponding to the query request is searched for in the preset smart contract and the target smart contract corresponding to the query request is determined as the resulting smart contract as follows. A security score range in the query request is parsed. Target smart contracts whose scores fall in the score range are searched for in the preset smart contract. The resulting smart contract is searched for in the target smart contracts whose scores fall in the score range.

In some implementations, the method further includes the following after the target smart contracts are obtained. Request information for evaluating the target smart contracts is sent to the user client. Evaluation information for the target smart contracts is received, where the evaluation information is determined by the user client. The evaluation information is stored into the preset smart contract, and the preset smart contract is added to the blockchain.

In some implementations, the method further includes the following after the evaluation information that is determined by the user client for the target smart contracts is received. Score of the target smart contracts are determined based on the evaluation information according to a preset scoring rule. The scores are stored into the preset smart contract and the preset smart contract is added to the blockchain.

In some implementations, the method further includes the following after the target smart contract corresponding to the query request is searched for in the preset smart contract and is determined as the resulting smart contract, and before the resulting smart contract is sent to the user client. Whether the resulting smart contract is safe is determined based on the evaluation information as follows. The resulting smart contract is sent to the user client based on a determination that the resulting smart contract is safe. A warning message is sent to the user client based on a determination that the resulting smart contract is unsafe.

A system for managing smart contracts is provided. The system is applicable to a blockchain node device and includes a first obtaining module, a second obtaining module, and a first storage module. The first obtaining module is configured to obtain target smart contracts. The second obtaining module is configured to obtain function description information of the target smart contracts. The first storage module is configured to store the target smart contracts and the function description information into a preset smart contract and to add the preset smart contract to the blockchain.

In some implementations, the system further includes a first sending module, a first receiving module, a second storage module, a second receiving module, a first searching module, and a second sending module. The first sending module is configured to send request information for evaluating the target smart contracts to the user client after the first obtaining module obtains the target smart contracts. The first receiving module is configured to receive evaluation information for the target smart contracts, where the evaluation information is determined by the user client. The second storage module is configured to store the evaluation information into the preset smart contract and to add the preset smart contract to the blockchain. The second receiving module is configured to receive a query request sent by the user client after the first storage module stores the target smart contracts and the function description into the preset smart contract. The first searching module is configured to search in the preset smart contract for a target smart contract corresponding to the query request and to determine the target smart contract corresponding to the query request as a resulting smart contract. The second sending module is configured to send the resulting smart contract to the user client.

In some implementations, the first searching module includes a first parsing unit and a first searching unit. The first parsing unit is configured to parse a target account identification in the query request. The first searching unit is configured to search in the preset smart contract for a target smart contract corresponding to the target account identification and to determine the target smart contract corresponding to the target account identification as the resulting smart contract.

In some implementations, the first searching module includes a second parsing unit, a second searching unit, and a third searching unit. The second parsing unit is configured to parse a security score range in the query request. The second searching unit configured to search in the preset smart contract for target smart contracts whose scores fall in the score range. The third searching unit is configured to search in the target smart contracts whose scores fall in the score range for the resulting smart contract.

In some implementations, the system further includes a first sending module, a first receiving module, and a second storage module. The first sending module is configured to send request information for evaluating the target smart contracts to the user client after the first obtaining module obtains the target smart contracts. The first receiving module is configured to receive evaluation information for the target smart contracts, where the evaluation information is determined by the user client. The second storage module is configured to store the evaluation information into the preset smart contract and to add the preset smart contract to the blockchain.

In some implementations, the system further includes a first determining module and a third storing module.

The first determining module is configured to determine scores of the target smart contracts based on the evaluation information according to a preset scoring rule, after the first receiving module receives the evaluation information that is determined by the user client for the target smart contracts. The third storing module is configured to store the scores into the preset smart contract and to add the preset smart contract to the blockchain.

In some implementations, the system further includes a judging module. After the first searching module searches in the preset smart contract for the target smart contract corresponding to the query request and determines the target smart contract corresponding to the query request as a resulting smart contract, and before the second sending module sends the resulting smart contract to the user client, the judging module is configured to determine whether the resulting smart contract is safe based on the evaluation information as follows. The judging module is configured to send the resulting smart contract to the user client based on a determination that the resulting smart contract is safe. The judging module is configured to send a warning message to the user client based on a determination that the resulting smart contract is unsafe.

An apparatus for managing smart contracts is provided. The apparatus includes a memory and a processor. The memory is configured to store computer programs. The processor is configured to execute the computer programs to perform any of operations carried out in the method for managing smart contracts as described above.

A computer readable storage medium is provided. The computer readable storage medium is configured to store computer programs which, when executed by a processor, cause the processor to perform any of operations carried out in the method for managing smart contracts as described above.

A method for managing smart contracts is provided according to the present disclosure. The method is applicable to a blockchain node device and is carried out as follows. The target smart contracts are obtained. Function description information of the target smart contracts is obtained. The target smart contracts and the function description information are stored into a preset smart contract and the preset smart contract is added to a blockchain. A query request sent by a user client is received. A target smart contract corresponding to the query request is searched for in the preset smart contract, and the target smart contract corresponding to the query request is determined as a resulting smart contract. The resulting smart contract is sent to the user client. According to the method for managing smart contracts provided by the present disclosure, since the target smart contracts and the function description information of the target smart contracts are stored into the preset smart contract, a user can determine functions of the target smart contracts according to the function description information, such that a smart contract that the user needs can be quickly selected from multiple smart contracts. Compared with the related art in which the user selects the smart contract when failing to known the functions of the smart contracts, the efficiency that the user uses the smart contracts is enhanced. A system and an apparatus for managing smart contract management, and a computer readable storage medium provided according to the present disclosure also solve corresponding technical problems.

### BRIEF DESCRIPTION OF THE DRAWINGS

To describe the technical solutions in the embodiments of the present disclosure or in the related art more clearly, the following briefly introduces the accompanying drawings required for describing the embodiments or the related art. Apparently, the accompanying drawings in the following description illustrate some embodiments of the present disclosure. Those of ordinary skill in the art may also obtain other drawings based on these accompanying drawings without creative efforts.
FIG. 1 is a first flow chart of a method for managing smart contracts according to an embodiment of the present disclosure;
FIG. 2 is a second flow chart of a method for managing smart contracts according to an embodiment of the present disclosure;
FIG. 3 is a schematic structural diagram of a system for managing smart contracts according to an embodiment of the present disclosure;
FIG. 4 is a schematic structural diagram of an apparatus for managing smart contracts according to an embodiment of the present disclosure;
FIG. 5 is schematic structural diagram of another apparatus for managing smart contracts according to an embodiment of the present disclosure.

### DETAILED DESCRIPTION

Technical solutions in the embodiments of the present disclosure will be described clearly and completely hereinafter with reference to the accompanying drawings in the embodiments of the present disclosure. Apparently, the described embodiments are merely some rather than all embodiments of the present disclosure. All other embodiments obtained by those of ordinary skill in the art based on the embodiments of the present disclosure without creative efforts shall fall within the protection scope of the present disclosure.

The present disclosure relates to blockchain technology. For ease of understanding, a blockchain (e.g., block chain) in the embodiments of the present disclosure will be briefly introduced. The blockchain is a distributed storage data structure exposed to all blockchain nodes that access a server, and the blockchain includes a number of blocks. A user terminal with a client can be registered as one blockchain node and forms a peer-to-peer (P2P) network with other blockchain nodes that access the blockchain server. Blockchain data can be stored in the P2P network, breakdown of any one or more blockchain nodes on the P2P network will not cause the loss of the blockchain data, and thus the blockchain data is highly secure, ensuring that data is stored permanently stored and cannot be tampered with. When a block is attested into the blockchain data, the blockchain nodes accessed the server can add the block. The blocks are added one by one to the blockchain data in the order of attested time (for example, a timing of being attested). Each block in the blockchain data except the first block is linked to its previous block, and just like a chain, a block in the blockchain data is linked to another block. When a block is attested to the blockchain data, the block cannot be modified.

Due to the transparency, inflexibility and immutability of smart contracts, and their inherently functional stability and neutrality, the smart contracts have more and more practice in authentication business scenarios. For example, the Canadian and Dutch governments have collaborated to use blockchain technology to verify identities of flight passengers, and the University College London has announced that they will adopts Bitcoin verification technology to verify graduate qualifications, etc. However, although the smart contracts are being used more and more widely, there are still phenomena that users fail to choose smart contracts they need when they don't know the functions of the smart contracts due to a large number of smart contracts, that is, it is inefficient for the users to use the smart contracts. The method for managing smart contracts provided according to the present disclosure can improve the efficiency that the users use the smart contracts.

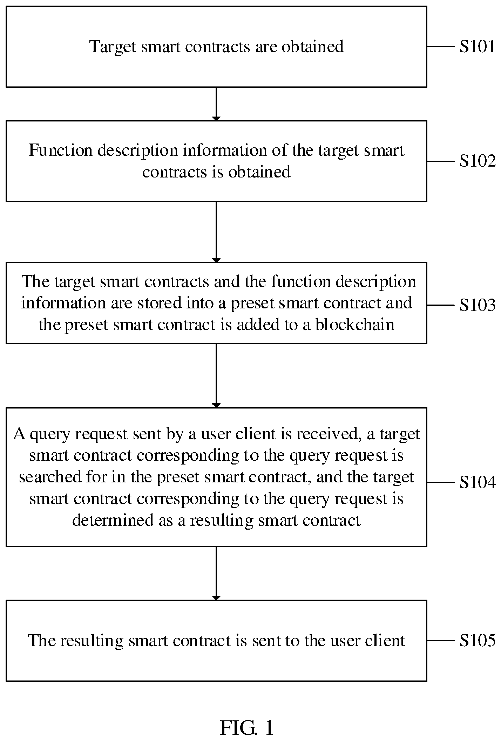

FIG. 1 is a first flow chart of a method for managing smart contracts according to an embodiment of the present disclosure.

A method for managing smart contracts is provided according to an embodiment of the present disclosure. The method is applicable to a blockchain node device and begins at S 101.

At S101, target smart contracts are obtained.

In this embodiment, the blockchain node device first obtains the target smart contracts. The target smart contract may be a smart contract newly uploaded by a user client and received by the blockchain node device. Alternatively, the target smart contract may be one of the smart contracts previously stored in the blockchain node device.

At S 102, function description information of the target smart contracts is obtained.

In this embodiment, after the blockchain node device obtains the target smart contracts, the blockchain node device can further obtain the function description information of the target smart contracts. The function description information is information for describing a function of the smart contract, and the specific content and form of the function description information can be flexibly determined according to actual needs. For example, the function description information may include a running result of the target smart contract, etc. Alternatively, the function description information may also include a keyword corresponding to the function of the target smart contract, etc.

At S103, the target smart contracts and the function description information are stored into a preset smart contract, and the preset smart contract is added to a blockchain.

In this embodiment, after the blockchain node device obtains the target smart contracts and the function description information, the target smart contracts and the function description information of the target smart contracts may be stored in the preset smart contract, and the preset smart contract is added to the blockchain. It is appreciated that when the target smart contracts and the function description information of the target smart contracts are stored in the preset smart contract, a correspondence relationship between the target smart contracts and the function description information of the target smart contracts needs to be ensured, such that when subsequently searching for a certain target smart contract, it only needs to search for the function description information corresponding to this target smart contract. In a specific application scenario, addresses of the target smart contracts may be stored in the preset smart contract, or keywords of the target smart contracts may be stored in the preset smart contract, or the like.

At S104, a query request sent by a user client is received, a target smart contract corresponding to the query request is searched for in the preset smart contract, and the target smart contract corresponding to the query request is determined as a resulting smart contract.

In this embodiment, after the blockchain node device adds the preset smart contract to the blockchain, the blockchain node device may further automatically search for the target smart contract corresponding to the query request in the preset smart contract when receiving the query request sent by the user client, and the target smart contract corresponding to the query request is determined as the resulting smart contract, thereby saving the time for the user to search for the resulting smart contract and improving search efficiency.

In a specific application scenario, the blockchain node device may search for the resulting smart contract based on a keyword in the query request. In an implementation, after the blockchain node device receives the query request sent by the user client, the keyword in the query request is parsed, and a target smart contract in the preset smart contract matched with the keyword in the query request is determined as the resulting smart contract.

In a specific application scenario, the blockchain node device may further search for the resulting smart contract based on an account identification (for example, a wallet address). In an implementation, after the blockchain node device receives the query request sent by the user client, the account identification in the query request is parsed, a target smart contract corresponding to the account identification is searched for in the preset smart contract, and the target smart contract corresponding to the account identification is determined as the resulting smart contract.

In a specific application scenario, the blockchain node device may further search for the resulting smart contract based on scores of the target smart contracts in the preset smart contract. In an implementation, after the blockchain node device receives the query request sent by the user client, a security score range in the query request is parsed. Target smart contracts whose scores fall in the score range are searched for in the preset smart contract, and the resulting smart contract is searched for in the target smart contracts whose scores fall in the score range.

At S 105, the resulting smart contract is sent to the user client.

In this embodiment, after the blockchain node device finds out the resulting smart contract, the resulting smart contract is sent to the user client. In a specific application scenario, in order to ensure the security for the user client to use the resulting smart contract, after the blockchain node device searches for the target smart contract corresponding to the query request in the preset smart contract and the target smart contract corresponding to the query request is determined as the resulting smart contract, and before the resulting smart contract is sent to the user client, the blockchain node device may further determine whether the resulting smart contract is safe based on evaluation information. The resulting smart contract is sent to the user client based on a determination that the resulting smart contract is safe, and a warning message is sent to the user client based on a determination that the resulting smart contract is unsafe to inform the user client that the resulting smart contract is unsafe.

A method for managing smart contracts is provided according to the present application. The method is applicable to a blockchain node device and is carried out as follows. Target smart contract are obtained. Function description information of the target smart contracts is obtained. The target smart contracts and the function description information of the target smart contracts are stored into a preset smart contract and the preset smart contract is added to a blockchain. A query request sent by a user client is received. A target smart contract corresponding to the query request is searched for in the preset smart contract, and the target smart contract corresponding to the query request is determined as a resulting smart contract. The resulting smart contract is sent to the user client. According to the method for managing smart contracts provided by the present disclosure, since the target smart contracts and the function description information of the target smart contracts are stored into the preset smart contract, a user can determine functions of the target smart contracts according to the function description information, such that a smart contract that the user needs can be quickly selected from multiple smart contracts. Compared with the related art in which the user selects the smart contract when failing to known the functions of the smart contracts, the efficiency that the user uses the smart contracts is enhanced.

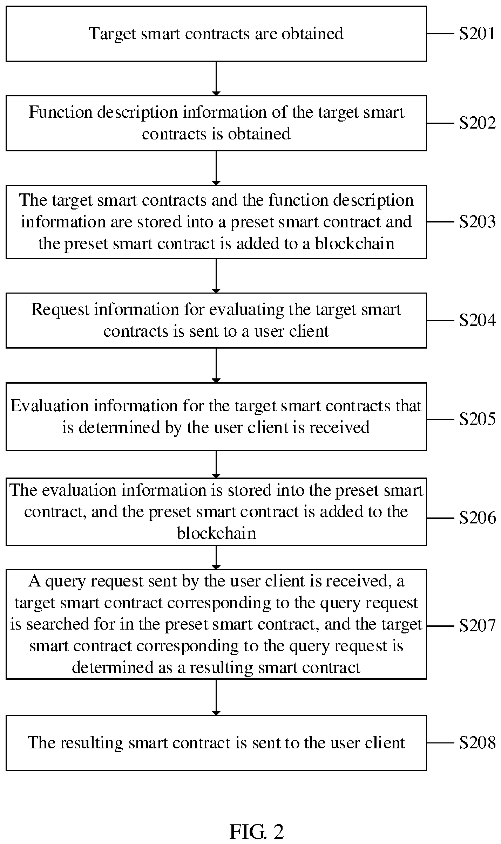

FIG. 2 is a second flow chart of a method for managing smart contracts according to an embodiment of the present disclosure.

To further facilitate the management of smart contracts, a method for managing smart contracts provided by the present disclosure includes the following operations.

At S201, target smart contracts are obtained.

At S202, function description information of the target smart contracts is obtained.

At S203, the target smart contracts and the function description information of the target smart contracts are stored into a preset smart contract, and the preset smart contract is added to a blockchain.

At S204, request information for evaluating the target smart contracts is sent to a user client.

In this embodiment, there is a problem that a malicious smart contract threatens the security of a user. In order to solve this problem, a blockchain node device may send the request information for evaluating the target smart contracts to the user client, thereby enabling the user client to evaluate the target smart contracts after accessing the target smart contracts.

At S205, evaluation information for the target smart contracts that is determined by the user client is received.

In this embodiment, after the blockchain node device sends the request information for evaluating the target smart contracts to the user client, the user client may evaluate the target smart contracts based on results of using the target smart contracts. Accordingly, the blockchain node device receives the evaluation information that is determined by the user client for the target smart contracts. The evaluation information may include that whether a target smart contract is safe, the influence of executing this target smart contract, etc.

At S206, the evaluation information is stored into the preset smart contract, and the preset smart contract is added to the blockchain.

Accordingly, the blockchain node device may store the evaluation information into the preset smart contract and add the preset smart contract to the blockchain, so as to facilitate subsequent users to understand the target smart contracts based on the evaluation information of the target smart contracts. It is appreciated that, when the evaluation information is stored in the preset smart contract, a correspondence relationship between the target smart contracts and the evaluation information of the target smart contracts needs to be ensured. In a specific application scenario, a table may be set in a preset target smart contract, the target smart contracts, corresponding function description information of the target smart contracts, and evaluation information are stored at corresponding positions in the table.

In a specific application scenario, in order to facilitate the subsequent users to have a general understanding of the target smart contracts, the method further includes the following. After the blockchain node device receives the evaluation information that is determined by the user client for the target smart contracts, scores of the target smart contracts are determined based on the evaluation information according to a preset scoring rule, the scores are stored into the preset smart contract, and the preset smart contract is added to the blockchain, such that the subsequent users are able to have a general understanding of the target smart contracts based on the scores of the target smart contracts. For example, when the preset scoring rule is a security scoring rule, the score of a target smart contract represents a security level of the target smart contract, and accordingly, the user can directly determine that a target smart contract with a score greater than a first value is a safe target smart contract, and a target smart contract with a score less than the first value is a dangerous target smart contract, etc., such that whether to access the target smart contract can be quickly decided based on the score of the target smart contract.

At S207, a query request sent by the user client is received, a target smart contract corresponding to the query request is searched for in the preset smart contract, and the target smart contract corresponding to the query request is determined as a resulting smart contract. At S208, the resulting smart contract is sent to the user client.

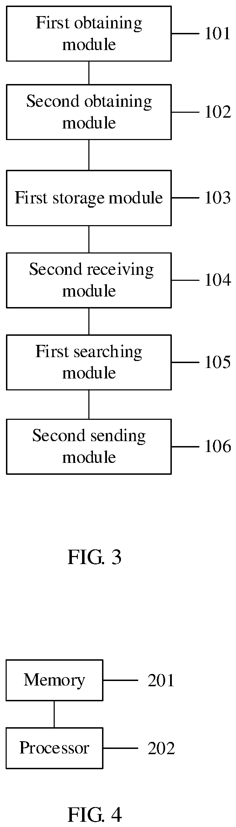

A system for managing smart contracts is further provided according to the present disclosure, and this system has the corresponding effect of the method for managing smart contract managements provided by the embodiments of the present disclosure. FIG. 3 is a schematic structural diagram of a system for managing smart contracts according to an embodiment of the present disclosure.

A system for managing smart contracts is provided according to the embodiments of the present disclosure. The system is applicable to a blockchain node device and includes a first obtaining module 101, a second obtaining module 102, a first storage module 103, a second receiving module 104, a first searching module 105, and a second sending module 106. The first obtaining module 101 is configured to obtain target smart contracts. The second obtaining module 102 is configured to obtain function description information of the target smart contracts. The first storage module 103 is configured to store the target smart contracts and the function description information of the target smart contracts into a preset smart contract and to add the preset smart contract to the blockchain. The second receiving module 104 is configured to receive a query request sent by a user client after the first storage module stores the target smart contracts and the function description of the target smart contracts. The first searching module 105 is configured to search in the preset smart contract for a target smart contract corresponding to the query request and to determine the target smart contract corresponding to the query request as a resulting smart contract. The second sending module 106 is configured to send the resulting smart contract to the user client.

In the system for managing smart contracts provided according to the embodiments of the present disclosure, the first searching module 105 may include a first parsing unit, a first searching unit. The first parsing unit is configured to parse an account identification (for example, a target wallet address) in the query request. The first searching unit is configured to search in the preset smart contract for a target smart contract corresponding to the target account identification and to determine the target smart contract corresponding to the target account identification as the resulting smart contract.

In the system for managing smart contracts provided according to the embodiments of the present disclosure, the first searching module 105 may include a second parsing unit, a second searching unit, and a third searching unit. The second parsing unit is configured to parse a security score range in the query request. The second searching unit is configured to search in the preset smart contract for target smart contracts whose scores fall in the score range. The third searching unit is configured to search in the target smart contracts whose scores fall in the score range for the resulting smart contract.

The system for managing smart contracts provided according to the embodiments of the present disclosure may further include a first sending module, a first receiving module, and a second storage module. The first sending module is configured to send request information for evaluating the target smart contracts to the user client after the first obtaining module obtains the target smart contracts. The first receiving module is configured to receive evaluation information determined by the user client for the target smart contracts. The second storage module is configured to store the evaluation information into the preset smart contract and to add the preset smart contract to the blockchain.

The system for managing smart contracts provided according to the embodiments of the present disclosure may further include a first determining module and a third storing module. The first determining module is configured to determine scores of the target smart contracts based on the evaluation information according to a preset scoring rule after the first receiving module receives the evaluation information that is determined by the user client for the target smart contracts. The third storing module is configured to store the scores into the preset smart contract and to add the preset smart contract to the blockchain.

The system for managing smart contracts provided according to the embodiments of the present disclosure may further include a judging module. After the first searching module 105 searches in the preset smart contract for the target smart contract corresponding to the query request and determines the target smart contract corresponding to the query request as a resulting smart contract, and before the second sending module 106 sends the resulting smart contract to the user client, the judging module is configured to determine whether the resulting smart contract is safe based on the evaluation information. The resulting smart contract is sent to the user client based on a determination that the resulting smart contract is safe. A warning message is sent to the user client based on a determination that the resulting smart contract is unsafe.

An apparatus for managing smart contracts and a computer readable storage medium are further provided according to the present disclosure. The apparatus and the computer readable storage medium each have the corresponding effect of the method for managing smart contracts provided by the embodiments of the present disclosure. FIG. 4 is a schematic structural diagram of an apparatus for managing smart contracts according to an embodiment of the present disclosure.

The apparatus for managing smart contracts provided according to the present disclosure includes a memory 201 and a processor 202. The memory 201 is configured to store computer programs, the processor 202 is configured to execute the computer programs stored in the memory 201 to carry out the following operations. Target smart contracts are obtained. Function description information of the target smart contracts is obtained. The target smart contracts and the function description information of the target smart contracts are stored into a preset smart contract and the preset smart contract is added to a blockchain. A query request sent by a user client is received. A target smart contract corresponding to the query request is searched for in the preset smart contract and the target smart contract corresponding to the query request is determined as a resulting smart contract. The resulting smart contract is sent to the user client.

The apparatus for managing smart contracts provided according to the present disclosure includes the memory 201 and the processor 202. The memory 201 is configured to store computer subroutines, the processor 202 is configured to execute the computer subroutines stored in the memory 201 to carry out the following operations. A target account identification in the query request is parsed. A target smart contract corresponding to the target account identification is searched for in the preset smart contract, and the target smart contract corresponding to the target account identification is determined as the resulting smart contract.

The apparatus for managing smart contracts provided according to the present disclosure includes the memory 201 and the processor 202. The memory 201 is configured to store computer subroutines, the processor 202 is configured to execute the computer subroutines stored in the memory 201 to carry out the following operations. A security score range in the query request is parsed. Target smart contracts whose scores fall in the score range are searched for in the preset smart contract. The resulting smart contract is searched for in the target smart contracts whose scores fall in the score range.

The apparatus for managing smart contracts provided according to the present disclosure includes the memory 201 and the processor 202. The memory 201 is configured to store computer subroutines, the processor 202 is configured to execute the computer subroutines stored in the memory 201 to carry out the following operations. After the target smart contracts are obtained, request information for evaluating the target smart contracts is sent to the user client. Evaluation information for the target smart contracts is received, and the evaluation information is determined by the user client. The evaluation information is stored into the preset smart contract and the preset smart contract is added to the blockchain.

The apparatus for managing smart contracts provided according to the present disclosure includes the memory 201 and the processor 202. The memory 201 is configured to store computer subroutines, the processor 202 is configured to execute the computer subroutines stored in the memory 201 to carry out the following operations. After the evaluation information that is determined by the user client for the target smart contracts is received, scores of the target smart contracts are determined based on the evaluation information according to a preset scoring rule. The scores are stored into the preset smart contract and the preset smart contract is added to the blockchain.

The apparatus for managing smart contracts provided according to the present disclosure includes the memory 201 and the processor 202. The memory 201 is configured to store computer subroutines, the processor 202 is configured to execute the computer subroutines stored in the memory 201 to carry out the following operations. After the target smart contract corresponding to the query request is searched for in the preset smart contract and is determined as the resulting smart contract, and before the resulting smart contract is sent to the user client, whether the resulting smart contract is safe is determined based on the evaluation information. The resulting smart contract is sent to the user client based on a determination that the resulting smart contract is safe, and a warning message is sent to the user client based on a determination that the resulting smart contract is unsafe.

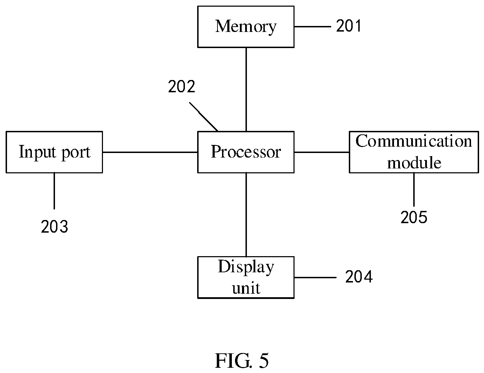

Referring to FIG. 5, another apparatus for managing smart contracts provided according to an embodiment of the present disclosure further includes an input port 203, a display unit 204, and a communication module 205. The input port 203 is connected to a processor 202 and configured to transmit instructions from the outside to the processor 202. The display unit 204 is connected to the processor 202 and configured to display a processing result of the processor 202 to the outside. The communication module 205 is connected to the processor 202 and configured to implement communication between the apparatus for managing smart contracts and the outside. The display unit 204 can be a display panel, a laser scanning display, and the like. Communication modes adopted by the communication module 205 include, but not limited to, mobile high-definition link technology (HML), universal serial bus (USB), high-definition multimedia interface (HDMI), and wireless connection such as wireless fidelity technology (WiFi), Bluetooth communication technology, low-power Bluetooth communication technology, communication technology based on IEEE802.11s.

A computer readable storage medium is provided according to the embodiments of the present disclosure. The computer readable storage medium stores computer programs which, when executed by a processor, cause the processor to carry out the following. Target smart contracts are obtained. Function description information of the target smart contracts is obtained. The target smart contracts and the function description information of the target smart contracts are stored into a preset smart contract and the preset smart contract is added to a blockchain. A query request sent by a user client is received. A target smart contract corresponding to the query request is searched for in the preset smart contract and the target smart contract corresponding to the query request is determined as a resulting smart contract. The resulting smart contract is sent to the user client.

The computer readable storage medium is provided according to the embodiments of the present disclosure. The computer readable storage medium stores computer subroutines which, when executed by a processor, cause the processor to carry out the following. A target account identification in the query request is parsed. A target smart contract corresponding to the target account identification is searched for in the preset smart contract, and the target smart contract corresponding to the target account identification is determined as the resulting smart contract.

The computer readable storage medium is provided according to the embodiments of the present disclosure. The computer readable storage medium stores computer subroutines which, when executed by a processor, cause the processor to carry out the following. A security score range in the query request is parsed. Target smart contracts whose scores fall in the score range are searched for in the preset smart contract. The resulting smart contract is searched for in the target smart contracts whose scores fall in the score range.

The computer readable storage medium is provided according to the embodiments of the present disclosure. The computer readable storage medium stores computer subroutines which, when executed by a processor, cause the processor to carry out the following. After the target smart contracts is obtained, request information for evaluating the target smart contracts is sent to the user client. Evaluation information for the target smart contracts is received, and the evaluation information is determined by the user client. The evaluation information is stored into the preset smart contract and the preset smart contract is added to the blockchain.

The computer readable storage medium is provided according to the embodiments of the present disclosure. The computer readable storage medium stores computer subroutines which, when executed by a processor, cause the processor to carry out the following. After the evaluation information that is determined by the user client for the target smart contracts is received, scores of the target smart contracts are determined based on the evaluation information according to a preset scoring rule. The scores are stored into the preset smart contract and the preset smart contract is added to the blockchain.

The computer readable storage medium is provided according to the embodiments of the present disclosure. The computer readable storage medium stores computer subroutines which, when executed by a processor, cause the processor to carry out the following. After the target smart contract corresponding to the query request is searched for in the preset smart contract and is determined as the resulting smart contract, and before the resulting smart contract is sent to the user client, whether the resulting smart contract is safe is determined based on the evaluation information. The resulting smart contract is sent to the user client based on a determination that the resulting smart contract is safe, and a warning message is sent to the user client based on a determination that the resulting smart contract is unsafe.

The computer readable storage medium to which the present disclosure relates includes random access memory (RAM), an internal storage, a read only memory (ROM), an electrically programmable ROM, electrically erasable programmable ROM, registers, a hard disk, a removable disk, a CD-ROM, or any other form of storage medium known in the art.

Descriptions of the relevant parts in the system and the apparatus for managing smart contract, and the computer readable storage medium provided by the embodiments of the present disclosure refer to the detailed description of the corresponding parts in the method for managing the smart contract provided by the embodiments of the present disclosure, which is not repeated herein. In addition, the implementation principles of parts of the foregoing technical solutions provided by the embodiments of the present disclosure that are consistent with that of the corresponding technical solutions in the related art are not described in detail, in order to avoid redundancy.

It is further noted that relational terms herein such as first and second are merely used to distinguish one entity or operation from another, and do not necessarily require or imply that any actual relationship or sequence exists between these entities or operations. Moreover, the terms "include", "comprise", or any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

The embodiments disclosed above are described to enable a person skilled in the art to implement or use this disclosure. Various modifications made to the embodiments will be obvious to a person skilled in the art, and the general principles defined herein may also be implemented in other embodiments without departing from the spirit or scope of this disclosure. Therefore, this disclosure is not intended to be limited to these embodiments illustrated herein, but shall be construed in the widest scope consistent with the principles and novel features disclosed herein.

## Claims

1. A method for managing smart contracts, applicable to a blockchain node device, comprising:
obtaining target smart contracts;
obtaining function description information of the target smart contracts;
storing the target smart contracts and the function description information into a preset smart contract, and adding the preset smart contract to a blockchain;
receiving a query request sent by a user client;
searching in the preset smart contract for a target smart contract corresponding to the query request, and determining the target smart contract corresponding to the query request as a resulting smart contract; and
sending the resulting smart contract to the user client.

2. The method of claim 1, wherein searching in the preset smart contract for the target smart contract corresponding to the query request, and determining the target smart contract corresponding to the query request as the resulting smart contract comprises:
parsing a target account identification in the query request; and
searching in the preset smart contract for a target smart contract corresponding to the target account identification, and determining the target smart contract corresponding to the target account identification as the resulting smart contract.

3. The method of claim 1, wherein searching in the preset smart contract for the target smart contract corresponding to the query request, and determining the target smart contract corresponding to the query request as the resulting smart contract comprises:
parsing a security score range in the query request;
searching in the preset smart contract for target smart contracts whose scores fall in the score range; and
searching in the target smart contracts whose scores fall in the score range for the resulting smart contract.

4. The method of any of claims 1 to 3, after obtaining the target smart contracts, further comprising the following:
sending request information for evaluating the target smart contracts to the user client;
receiving evaluation information for the target smart contracts, wherein the evaluation information is determined by the user client; and
storing the evaluation information into the preset smart contract, and adding the preset smart contract to the blockchain.

5. The method of claim 4, after receiving the evaluation information for the target smart contracts, wherein the evaluation information is determined by the user client, further comprising the following:
determining scores of the target smart contracts based on the evaluation information according to a preset scoring rule; and
storing the scores into the preset smart contract, and adding the preset smart contract to the blockchain.

6. The method of claim 4, after searching in the preset smart contract for the target smart contract corresponding to the query request and determining the target smart contract corresponding to the query request as the resulting smart contract, and prior to sending the resulting smart contract to the user client, further comprising the following:
determining whether the resulting smart contract is safe based on the evaluation information ;
sending the resulting smart contract to the user client based on a determination that the resulting smart contract is safe; and
sending a warning message to the user client based on a determination that the resulting smart contract is unsafe.

7. A system for managing smart contracts, applicable to a blockchain node device, comprising:
a first obtaining module configured to obtain target smart contracts;
a second obtaining module configured to obtain function description information of the target smart contracts;
a first storage module configured to store the target smart contracts and the function description information into a preset smart contract and to add the preset smart contract to the blockchain;
a second receiving module configured to receive a query request sent by a user client after the first storage module stores the target smart contracts and the function description information into the preset smart contract;
a first searching module configured to search in the preset smart contract for a target smart contract corresponding to the query request and to determine the target smart contract corresponding to the query request as a resulting smart contract; and
a second sending module configured to send the resulting smart contract to the user client.

8. The system for managing smart contracts of claim 7, further comprising:
a first sending module configured to send request information for evaluating the target smart contracts to the user client after the first obtaining module obtains the target smart contracts;
a first receiving module configured to receive evaluation information for the target smart contracts, wherein the evaluation information is determined by the user client; and
a second storage module configured to store the evaluation information into the preset smart contract and to add the preset smart contract to the blockchain.

9. An apparatus for managing smart contracts, comprising:
a memory configured to store computer programs; and
a processor configured to execute the computer programs to perform the method for managing smart contracts of any of claims 1 to 6.

10. A computer readable storage medium, configured to store computer programs which, when executed by a processor, cause the processor to perform the method for managing smart contracts of any of claims 1 to 6.
